# EUROPÄISCHE PATENTSCHRIFT

(11) **EP 0 373 378 B1**
(45) Veröffentlichungstag und Bekanntmachung des Hinweises auf die Patenterteilung: **05.05.1993**
(21) Anmeldenummer: 89121150.0
(22) Anmeldetag: 15.11.1989
(51) Int. Cl.: F27B 3/18, F27D 3/00, C21C 5/52, C21C 5/56

(54) **Verfahren zum Betrieb eines Einschmelzaggregates und Einschmelzaggregat für dieses Verfahren**
Process for the operation of a melting unit, and melting unit for performing this process
Procédé pour le fonctionnement d'une unité de fusion et unité de fusion pour le procédé

(30) Priorität: 18.11.1988 DE 3839095
(43) Veröffentlichungstag der Anmeldung: 20.06.1990
(73) Patentinhaber: Fuchs Systemtechnik GmbH, D-77731 Willstätt (DE)
(72) Erfinder: Ehle, Joachim, D-7606 Lautenbach (DE); Fuchs, Gerhard, D-7640 Kehl-Bodersweier (DE)
(74) Vertreter: Blumbach Weser Bergen Kramer

(56) Entgegenhaltungen:
- EP-A- 0 170 809
- DE-A- 1 937 839
- DE-A- 3 444 181
- DE-U- 8 412 739
- US-A- 4 280 836

## Beschreibung

Die Erfindung betrifft ein Verfahren und ein Einschmelzaggregat gemäß dem Gattungsbegriff der Ansprüche 1 bzw. 10.

Durch das DE-Gbm 84 12 739 sind ein Verfahren und eine Vorrichtung dieser Art bekannt geworden.

Bei dem bekannten Verfahren wird das Chargiergut durch einen schachtförmigen Schrottvorwärmer in einen im Ofengefäß vorhandenen Metallsumpf chargiert. Lediglich zur erstmaligen Erzeugung eines Metallsumpfes im Ofenherd ist auch vorgesehen, Schrott mittels eines Schrottkorbes unmittelbar in das Ofengefäß einzubringen.

Bei dieser Verfahrensweise besteht das Problem, daß nach dem Abstich und dem erneuten Zünden des Lichtbogens das elektrische Energieeinbringen durch die zu diesem Zeitpunkt hohe Badtemperatur begrenzt ist. Der Restsumpf, der nach dem Abstich im Ofengefäß bleibt, kühlt in dieser kurzen Zeit so wenig ab, daß zur Vermeidung einer Überhitzung des Bades nur eine geringe elektrische Energie eingebracht werden kann. Nach dem Zünden der Brenner muß man etwa 15 bis 20 Minuten abwarten, bis diese so viel Chargiergut im unteren Bereich des schachtförmigen Chargiergutvorwärmers erschmolzen haben, daß die Badtemperatur im Ofengefäß aufgrund der zufließenden Schmelze verhältnismäßig niedriger Temperatur ausreichend abgekühlt ist, um wieder eine hohe elektrische Energie einbringen zu können. Die für das Einschmelzen verfügbare Leistung kann somit in der Anfangsphase nicht ausgenutzt werden, wodurch sich die Einschmelzzeit entsprechend erhöht.

Aufgabe der Erfindung ist es, ein Verfahren der im Gattungsbegriff des Anspruchs 1 genannten Art sowie ein Einschmelzaggregat verfügbar zu machen, bei denen auch zu Beginn des Einschmelzprozesses die maximale Energie zugeführt und damit der Einschmelzprozess verkürzt werden kann.

Die Aufgabe wird durch die Merkmale des Anspruchs 1 gelöst. Vorteilhafte Ausgestaltungen des erfindungsgemäßen Verfahrens sind den Ansprüchen 2 bis 9 zu entnehmen. Ein Einschmelzaggregat für dieses Verfahren ist in den Ansprüchen 10 bis 18 angegeben.

Bei dieser Verfahrensweise ist es möglich, in der Anfangsphase des Einschmelzprozesses den Teil der Chargiergutmenge, der unmittelbar über den Deckel in das Ofengefäß eingebracht worden ist, sofort mit hoher elektrischer Leistung einzuschmelzen. Vorteilhaft ist hierbei, daß die Ofengefäßwände durch das Chargiergut, z.B. Stahlschrott, in das sich die Lichtbögen einbrennen, vor direkter Lichtbogeneinstrahlung geschützt sind. Parallel zu dem Chargieren des in das Ofengefäß eingebrachten Teils wird so schnell wie technisch möglich der restliche Teil in den schachtförmigen Chargiergutvorwärmer eingebracht und wenn der Vorwärmer weitestgehend gefüllt ist, werden auch die Brenner im unteren Bereich des Chargiergutvorwärmers gezündet, so daß der gesamte Schmelzprozess mit vollem Energieeinbringen sowohl durch die Lichtbögen als auch durch die Brenner in Gang gesetzt ist.

Für eine optimale Verfahrensweise ist eine Abstimmung zwischen Lichtbogenenergie-Einbringen und Brennerenergie-Einbringen erforderlich. Wird im Verhältnis zur Lichtbogenenergie zu viel Brennerenergie eingesetzt, dann schmilzt das Chargiergut im Vorwärmer schnell nieder, die durch die Lichtbögen in Wärme umgesetzte elektrische Energie reicht aber bei zu schwacher Leistung nicht aus, das unmittelbar in das Ofengefäß eingebrachte Chargiergut schnell genug niederzuschmelzen und gleichzeitig den Stahl mit dem Ansteigen des Flüssigstahlvolumens auf die gewünschte Abstichtemperatur zu bringen. Umgekehrt wird bei zu hohem elektrischem Energieeinbringen im Vergleich zur Brennerenergie die Aufschmelzzeit der Chargiergutsäule im Vorwärmer zu lange, verglichen mit der Einschmelzzeit des unmittelbar in das Ofengefäß chargierten Materials durch elektrische Energie und verglichen zur Aufheizzeit des Bades. Das Verhältnis Lichtbogenenergie-Einbringen zu Brennerenergie-Einbringen soll zweckmäßigerweise im Bereich von 6 : 1 bis 2 : 1 liegen. Bei einem praktisch erprobten Verfahren, bei dem 30 % der für eine Schmelze erforderliche Chargiergutmenge unmittelbar in das Ofengefäß, der Rest über den Vorwärmer chargiert wurde, hat das Verhältnis 5 : 1 sehr günstige Ergebnisse gebracht. Das Verhältnis hängt jedoch nicht nur von der Aufteilung des Chargiergutes auf das Ofengefäß und den Vorwärmer, sondern von der Beschaffenheit des jeweiligen Chargiergutanteils ab. Es sollte im Hinblich darauf eingestellt werden, daß bei hoher Lichtbogenleistung die gesamte für eine Schmelze erforderliche Chargiergutmenge innerhalb der kürzesten Zeit erschmolzen und auf Abstichtemperatur gebracht werden kann.

Eine weitere Einflußgröße ist in diesem Zusammenhang die Menge der bei der vorgesehenen Sumpffahrweise nach dem Abstich im Ofengefäß verbleibenden Restschmelze. Bei dem erprobten Verfahren ist beim Abstich etwa 50 % des Abstichgewichtes als Restschmelze im Ofengefäß zurückgehalten worden.

Das Einbringen eines Teils der Chargiergutmenge in das Ofengefäß löst ein weiteres Problem, das besteht, wenn Schrott unterschiedlicher Größe eingeschmolzen werden soll. Wird sogenannter Schwerschrott in den schachtförmigen Vorwärmer chargiert, dann kann es hier zu Blockierungen kommen, insbesondere wenn wie bei dem eingangs erwähnten Einschmelzaggregat der Boden des Vorwärmers unter einem verhältnismäßig flachen Neigungswinkel zum Herdboden hin abfällt und der Durchtrittsquerschnitt durch die Verbindungszone zwischen Vorwärmer und Ofengefäß nicht groß genug bemessen ist. Werden die Bedingungen für den Materialfluß im Schrottvorwärmer und aus diesem in das Ofengefäß durch eine Vergrößerung des Neigungswinkels des Bodens und einen größtmöglichen Öffnungsquerschnitt der Verbindungszone verbessert, dann besteht die Gefahr, daß bei Einsatz von in der Größe stark verschiedenem Schrott dieser unkontrolliert schubweise über die Verbindungszone in den Ofenherd gelangt, insbesondere auch bei einer für den Abstich vorgesehenen Kippbewegung, und hierdurch nicht nur eine exakte Steuerung des Abstichvolumens unmöglich wird, sondern auch eine erhöhte Gefahr von Elektrodenbrüchen der sich in der Nähe der Verbindungszone befindlichen Elektroden aufgrund von Schrotteinstürzen besteht. Wird der Schwerschrott über den Deckel chargiert und der Mittel- und Leichtschrott über den schachtförmigen Chargiergutvorwärmer, wobei dieser für jede Schmelze leer gefahren wird, dann sind diese Probleme behoben, insbesondere wenn der Boden des Vorwärmers mit einem größeren Neigungswinkel als mit 30° ausgebildet wird und der Durchtrittsquerschnitt der Verbindungszone möglichst groß gemacht wird.

Bei einer solchen aus Gründen eines nicht exakt steuerbaren Materialflusses vorgesehenen Verfahrensweise ist es allerdings nicht möglich, während des gesamten Einschmelzund Feinungsprozesses die heißen Ofenabgase für die Schrottvorwärmung im schachtförmigen Chargiergutvorwärmer auszunutzen. Um dies dennoch zu ermöglichen, ist gemäß einer Weiterbildung der Erfindung dem schachtförmigen Chargiergutvorwärmer eine Vorwärmkammer nachgeschaltet, die zur Aufnahme eines mit Chargiergut gefüllten Behälters geeignet ist. In diesen Behälter wird der unmittelbar in das Ofengefäß zu chargierende Teil eingebracht und durch die aus dem Gasauslaß des schachtförmigen Chargiergutvorwärmers während des vorhergehenden Einschmelzprozesses abgezogenen Gase vorgewärmt. Damit kann die Wärmeenergie der Ofenabgase während der gesamten Einschmelz- und Feinungsphase ausgenutzt werden. Dem schachtförmigen Chargiergutvorwärmer wird vorzugsweise Leicht- und Mittelschrott zugeführt. In der Vorwärmkammer wird im wesentlichen Schwerschrott oder Schwer- und Mittelschrott aufgeheizt. Durch Einsatz von Kohle oder von stückigem oder granulatförmigem Roheisen kann der Kohlenstoffgehalt der Schmelze im gewünschten Sinne beeinflußt und durch Einblasen von Sauerstoff in die Schmelze zusätzlich Wärmeenergie eingebracht werden.

Während des Einschmelzprozesses, bei dem das im unteren Bereich der Chargiergutsäule verflüssigte Material dem Schmelzbad im Ofenherd zugeführt wird, welches aufgrund des elektrischen Energieeinbringens eine höhere Temperatur als das zufließende Material aus dem Vorwärmer aufweist, ist es vorteilhaft, insbesondere in dem Bereich zwischen Ofengefäßmitte und der vertikalen Verlängerung der dem Ofengefäß benachbarten Schachtwand des Vorwärmers Spülgase zur Verbesserung der Durchmischung der Schmelze einzublasen. Zu diesem Zweck sind im Boden des Ofengefäßes Unterbaddüsen bzw. gasdurchlässige Bodenspülsteine vorgesehen, durch die beispielsweise inerte Gase eingeblasen werden. Es besteht auch die Möglichkeit, mittels beweglicher Ultraschall-Sauerstofflanzen die Schmelze zu durchmischen. Hierdurch wird nicht nur ein schneller Temperaturausgleich, sondern auch die gewünschte Homogenität der Schmelze erreicht.

Die Erfindung wird durch ein Ausführungsbeispiel anhand von zwei Figuren näher erläutert. Es zeigen:

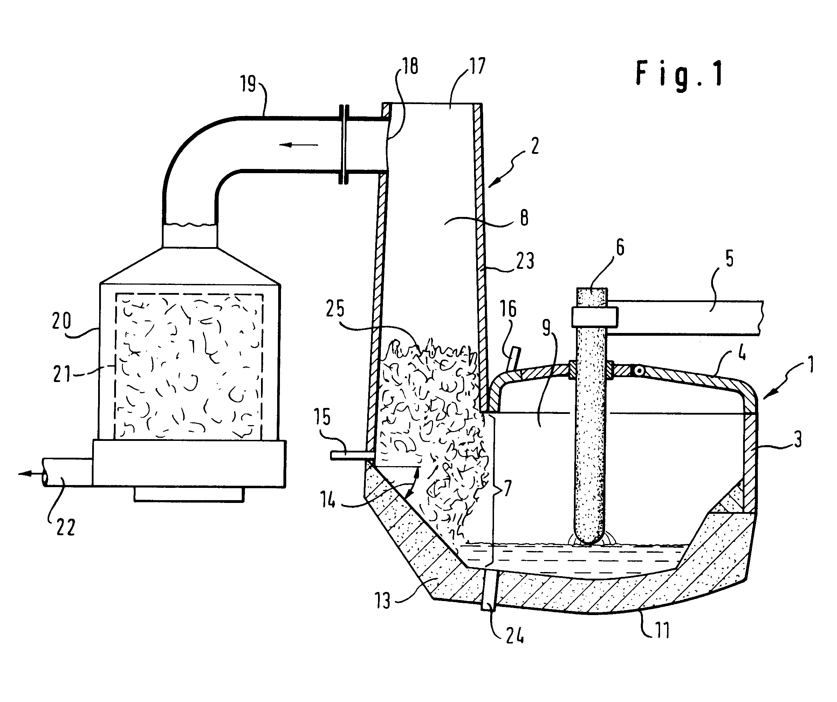

- Fig. 1: einen Längsschnitt eines Einschmelzaggregates zur Durchführung des erfindungsgemäßen Verfahrens,
- Fig. 2: eine Draufsicht dieses Aggregates.

Das in den Figuren dargestellte Einschmelzaggregat umfaßt einen Lichtbogenofen 1 und einen schachtförmigen Chargiergutvorwärmer 2. Der Lichtbogenofen enthält ein Ofengefäß 3 mit einem ausschwenkbaren Deckel 4, durch den drei von Tragarmen 5 getragene, mittels einer Hub- und Schwenkvorrichtung anhebbare und seitlich verschwenkbare Elektroden 6 in das Ofengefäß einfahrbar sind.

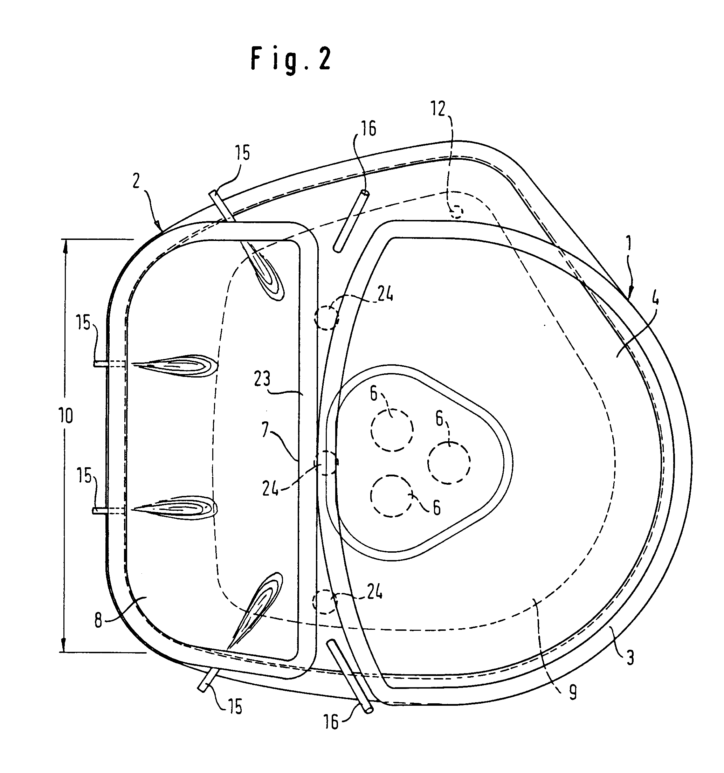

Der Chargiergutvorwärmer 2 ist seitlich am Ofengefäß 3 angeordnet und im Querschnitt nahezu rechteckig ausgebildet (siehe Fig. 2). Auf der Seite des Chargiergutvorwärmers ist das Ofengefäß segmentartig abgeschnitten und ohne Seitenwand ausgebildet, so daß sich die Verbindungszone 7 zwischen dem Innenraum 8 des Chargiergutvorwärmers und dem Innenraum 9 des Ofengefäßes etwa über die gesamte Breite 10 des Vorwärmers 2 und nahezu über die gesamte Höhe des Lichtbogenofens erstreckt. Der die Schmelze aufnehmende ausgemauerte Ofenherd ist mit 11 bezeichnet und weist ein exzentrisch angeordnetes Abstichloch 12 auf. Das Ofengefäß 1 und der mit diesem integrierte Vorwärmer 2 sind zum Abstechen um ihre Verbindungsachse, d.h. in Fig. 2 um eine waagerechte Achse in bekannter Weise kippbar. Der ausgemauerte Boden 13 des Vorwärmers 2 fällt unter einem Neigungswinkel 14 von etwa 45° zum Boden des Ofenherdes 11 ab. Außerdem erweitert sich der Querschnitt des Innenraums 8 des Vorwärmers 2 nach unten, so daß in Verbindung mit dem verhältnismäßig großen Durchtrittsquerschnitt in der Verbindungszone 7 ein guter Materialfluß in den Herdraum gewährleistet ist. Im unteren Bereich des Chargiergutvorwärmers 2 münden oberhalb der Ausmauerung Brenner bzw. Düsen 15. Außerdem sind Brenner bzw. Düsen 16 vorgesehen, die zur Verbindungszone 7 hin ausgerichtet sind. Im oberen Bereich weist der Chargiergutvorwärmer 2 eine verschließbare Beschickungsöffnung 17 sowie einen Gasauslaß 18 auf. Der Gasauslaß 18 ist über ein Gasrohr 19 mit einer Vorwärmkammer 20 verbunden, die zur Aufnahme eines mit Chargiergut gefüllten Behälters bzw. Schrottkorbs 21 geeignet ist. Von der Vorwärmkammer 20 führt ein Gasrohr 22 zum Kamin. Wie aus Fig. 2 hervorgeht, sind die Elektroden 6 nicht in der Mitte des Ofengefäßes angeordnet, sondern in Richtung des schachtförmigen Chargiergutvorwärmers 2 versetzt. Hierdurch kann die durch die Lichtbögen erzeugte Strahlungshitze verstärkt auf das über den Chargiergutvorwärmer 2 zugeführte Chargiergut einwirken und gleichzeitig die Strahlungsbelastung der freien Wandbereiche des Lichtbogenofens verringert werden. Zur Verbesserung der Durchmischung der Schmelze sind in der Nähe der vertikalen Verlängerung der dem Ofengefäß benachbarten Schachtwand 23 Spülsteine 24 im Boden des Ofengefäßes angeordnet, durch die ein Spülgas einleitbar ist. Solche Spülsteine können auch an anderer Stelle im Boden des Ofengefäßes angeordnet sein. Vorzugsweise sind sie jedoch im Bereich zwischen den Elektroden und der vertikalen Verlängerung der Schachtwand 23 angeordnet.

Es wird nun das Verfahren zum Betrieb des beschriebenen Einschmelzaggregates erläutert.

Beim Abstich einer Schmelze durch Kippen des Lichtbogenofens 1 und des mit diesem integrierten Vorwärmers 2 nach dem Ausfahren der Elektroden und Abkoppeln des Vorwärmers 2 vom Gasrohr 19 wird im Ofengefäß eine Restschmelze belassen, die etwa 50 % des Abstichgewichts ausmacht. Beim vorhergehenden Einschmelzprozess war das gesamte Einsatzmaterial des schachtförmigen Chargiergutvorwärmers eingeschmolzen und das Chargiergut eines in die Vorwärmkammer 20 eingesetzten Schrottkorbes 21 aufgeheizt worden. Nach dem Zurückkippen des Ofengefäßes wird der Ofendeckel 4 beiseite geschwenkt und der Inhalt des aus der Vorwärmkammer 20 entnommenen Schrottkorbes 21 unmittelbar in das Ofengefäß auf den in diesem befindlichen Restsumpf chargiert. Nach der Entnahme des Schrottkorbs 21 aus der Vorwärmkammer 20 wird in diese sofort ein neuer Schrottkorb eingesetzt. Unmittelbar nach dem Zurückkippen des Ofengefäßes wird auch mit dem Chargieren des schachtförmigen Chargiergutvorwärmers 2 begonnen, wobei dieser Chargiervorgang wegen der kleineren Beschickungsöffnung 17 und wegen der größeren Chargiermenge einige Minuten in Anspruch nimmt. Bei dem durchgeführten Verfahren wurden 30 % des gesamten Schrottgewichtes über den Deckel und 70 % in den Chargiergutvorwärmer chargiert.

Unmittelbar nach dem Chargieren des Schrottkorbinhalts in das Ofengefäß wird der Deckel zurückgeschwenkt und nach Einfahren der Elektroden in das Ofengefäß mit dem Lichtbogenschmelzprozess begonnen, wobei hier mit voller Leistung gefahren werden kann, da die Gefäßwände durch Schrott vor der unmittelbaren Einwirkung der Lichtbögen geschützt sind und der Restsumpf nicht überhitzt werden kann. Nach Beendigung des Chargiervorgangs in den schachtförmigen Vorwärmer 2 wird dessen Beschickungsöffnung 17 verschlossen und es werden die Brenner 15 und 16 in Gang gesetzt. Außerdem wird durch die Spülsteine 24 Spülgas eingeleitet.

Gleichzeitig mit dem Einbrennen der Lichtbögen in das unmittelbar in das Ofengefäß 3 eingesetzten Chargiergutes sowie dem Aufschmelzen dieses Teils der Chargiergutmenge wird auch durch die Brenner 15 bzw. 16 unterstützt durch die Lichtbogenhitze der untere Bereich der Chargiergutsäule 25 aufgeschmolzen, d.h. des Teils der Gesamtmenge, der in den Vorwärmer 2 eingebracht worden ist. Die heißen Abgase aus dem Ofengefäß und von den Brennern heizen hierbei die Chargiergutsäule 25 vor und außerdem auch das in der Vorwärmkammer 20 befindliche Chargiergut des Schrottkorbs 21. Je mehr der Einschmelzprozess fortschreitet, umso mehr sinkt die Chargiergutsäule 25 ab und umso höher wird die Temperatur der über das Gasrohr 19 in die Vorwärmkammer 20 eingeleiteten Heizgase.

Bei dem ausgeführten Verfahren war das Verhältnis Lichtbogenenergie-Einbringen zu Brennerenergie-Einbringen auf etwa 5 : 1 eingestellt. Einer örtlichen Überhitzung des Bades wurde bei noch nicht vollständig eingeschmolzener Chargiergutsäule 25 dadurch entgegengewirkt, daß die über den relativ stark geneigten Boden 13 zufließende Schmelze verhältnismäßig niedriger Temperatur in der Nähe der Verbindungszone gut mit der heißerem Schmelze des Ofenherdes 11 vermischt wurde. Auf diese Weise kann während des gesamten Einschmelzprozesses auch nach dem Niederschmelzen des unmittelbar in das Ofengefäß chargierten Teils mit hoher elektrischer Energie gearbeitet werden. Erst beim Feinen, wenn das gesamte Chargiergut im schachtförmigen Chargiergutvorwärmer niedergeschmolzen ist, wird die elektrische Energie so weit zurückgenommen, daß eine Lichtbogenlänge von etwa 200 mm erzielt wird. Diese läßt sich durch eine Schlackeschicht so weit abdecken, daß die Ofenwände auch beim Feinungsprozess vor direkter Lichtbogeneinstrahlung geschützt sind.

Nach dem Feinungsprozess wird, wenn die Schmelze die Abstichtemperatur erreicht hat, ein Teil abgestochen, und der Einschmelzprozess für die nächste Schmelze wiederholt sich wie beschrieben.

## Patentansprüche

1. Verfahren zum Betrieb eines Einschmelzaggregates aus einem ein Ofengefäß und einen ausschwenkbaren Ofendeckel enthaltenden Lichtbogenofen und
wenigstens einem seitlich am Ofengefäß angeordneten, schachtförmigen Chargiergutvorwärmer, dessen Innenraum in einem an seinen Boden angrenzenden Bereich durch eine Verbindungszone mit dem Innenraum des Ofengefäßes verbunden ist,
der außerdem in seinem oberen Bereich ein Beschickungsöffnung für Chargiergut und einen Gasauslaß und in seinem unteren Bereich Brenner bzw. Düsen aufweist,
wobei das in den Chargiergutvorwärmer chargierte metallische Chargiergut, insbesondere Stahlschrott, eine Chargiergutsäule bildet, die im Wärmetausch mit den heißen Gasen des Ofengefäßes und der Brenner aufgeheizt wird, und
die im unteren Bereich durch die Brenner und unter der Hitzeeinwirkung der Lichtbögen sowie im Kontakt mit dem flüssigen Sumpf im Ofenherd aufgeschmolzen und die Schmelze im Ofenherd auf Abstichtemperatur gebracht wird,
wobei ferner nach dem Abstich eine Restschmelze im Ofenherd verbleibt (Sumpffahrweise),
dadurch gekennzeichnet, daß nach dem Abstich von der für die nächste Schmelze erforderlichen Chargiergutmenge ein Teil unmittelbar in das Ofengefäß und der Rest in den Chargiergutvorwärmer chargiert wird.

2. Verfahren nach Anspruch 1, dadurch gekennzeichnet, daß das Verhältnis Lichtbogenenergie-Einbringen zu Brennerenergie-Einbringen zwischen 6 : 1 und 2 : 1 liegt.

3. Verfahren nach Anspruch 1 oder 2, dadurch gekennzeichnet, daß der unmittelbar in das Ofengefäß chargierte Teil 20 bis 50 Gew.-% der für die nächste Schmelze erforderlichen Chargiergutmenge ausmacht.

4. Verfahren nach einem der Ansprüche 1 bis 3, dadurch gekennzeichnet, daß der unmittelbar in das Ofengefäß zu chargierende Teil durch aus dem Gasauslaß des Chargiergutvorwärmers während des vorhergehenden Einschmelzprozesses abgezogene Gase vorgewärmt wird.

5. Verfahren nach einem der Ansprüche 1 bis 4, dadurch gekennzeichnet, daß der unmittelbar in das Ofengefäß chargierte Teil im wesentlichen aus Schwer- und Mittelschrott besteht.

6. Verfahren nach einem der Ansprüche 1 bis 5, dadurch gekennzeichnet, daß der unmittelbar in das Ofengefäß chargierte Teil stückiges oder granulatförmiges Roheisen enthält.

7. Verfahren nach einem der Ansprüche 1 bis 6, dadurch gekennzeichnet, daß in einem Einschmelzprozess die gesamte Chargiergutmenge des schachtförmigen Chargiergutvorwärmers eingeschmolzen wird.

8. Verfahren nach einem der Ansprüche 1 bis 7, dadurch gekennzeichnet, daß während des Einschmelzprozesses durch Unterbaddüsen bzw. gasdurchlässige Bodenspülsteine Spülgase zur Verbesserung der Durchmischung der Schmelze eingeblasen werden.

9. Verfahren nach einem der Ansprüche 1 bis 8, dadurch gekennzeichnet, daß durch eine in verschiedene Richtungen ausrichtbare und in der Höhe verstellbare Lanze Gase, insbesondere Sauerstoff, in die Schmelze eingeblasen werden.

10. Einschmelzaggregat zur Durchführung des Verfahrens nach einem der Ansprüche 1 bis 9 mit
einem ein Ofengefäß (3) und einen ausschwenkbaren Deckel (4) enthaltenden Lichtbogenofen (1),
wenigstens einem seitlich am Ofengefäß (3) angeordneten schachtförmigen Chargiergutvorwärmer (2),
dessen Innenraum (8) in einem an seinen Boden (13) angrenzenden Bereich durch eine Verbindungszone (7) mit dem Innenraum (9) des Ofengefäßes (3) verbunden ist,
der außerdem in seinem oberen Bereich eine verschließbare Beschickungsöffnung (17) für Chargiergut und einen Gasauslaß (18) und in seinem unteren Bereich Brenner bzw. Düsen (15, 16) aufweist,
dadurch gekennzeichnet, daß mit dem Gasauslaß (18) des schachtförmigen Chargiergutvorwärmers (2) der Gaseinlaß einer Vorwärmkammer (20) verbunden ist, die zur Aufnahme eines mit Chargiergut gefüllten Behälters (21) geeignet ist.

11. Einschmelzaggregat nach Anspruch 10, dadurch gekennzeichnet, daß im Boden des Ofengefäßes (3) zwischen der Gefäßmitte und der vertikalen Verlängerung der benachbarten Schachtwand (23) wenigstens eine Düse bzw. ein gasdurchlässiger Bodenspülstein (24) angeordnet ist.

12. Einschmelzaggregat nach Anspruch 11, dadurch gekennzeichnet, daß die Düse bzw. der Spülstein (24) in der Nähe der vertikalen Verlängerung der dem Ofengefäß benachbarten Schachtwand (23) angeordnet ist.

13. Einschmelzaggregat nach einem der Ansprüche 10 bis 12, dadurch gekennzeichnet, daß die Elektrode(n) (6) des Lichtbogenofens aus der Mitte des Ofengefäßes (3) in Richtung des schachtförmigen Chargiergutvorwärmers (2) versetzt ist (sind).

14. Einschmelzaggregat nach einem der Ansprüche 10 bis 13, dadurch gekennzeichnet, daß sich die tiefste Stelle des Herdraums im Ofengefäß (3) im Bereich unter der (den) Elektrode(n) (6) befindet.

15. Einschmelzaggregat nach einem der Ansprüche 10 bis 14, dadurch gekennzeichnet, daß der Boden (13) des Chargiergutvorwärmers (2) unter einem Neigungswinkel (14) von größer 30° und kleiner 60° zum Ofenherd hin abfallend ausgebildet ist.

16. Einschmelzaggregat nach einem der Ansprüche 10 bis 15, dadurch gekennzeichnet, daß das Verhältnis Höhe zu Quadratwurzel des mittleren Querschnitts des schachtförmigen Chargiergutvorwärmers (2) im Bereich zwischen 1,2 und 3 liegt.

17. Einschmelzaggregat nach einem der Ansprüche 10 bis 16, dadurch gekennzeichnet, daß das Ofengefäß (3) und der mit diesem integrierte Chargiergutvorwärmer (2) um eine, dessen Mittemit der Gefäßmitte verbindende Achse kippbar ist.

18. Einschmelzaggregat nach einem der Ansprüche 10 bis 17, dadurch gekennzeichnet, daß sich der Querschnitt des Innenraums des Chargiergutvorwärmers nach unten erweitert.

## Claims

1. A method of operating a smelting unit comprising an electric arc furnace including a furnace vessel and a furnace cover which can be pivoted away, and
at least one shaft-like charging material preheater which is arranged laterally on the furnace vessel and the interior of which is connected in its region adjoining its bottom to the interior of the furnace vessel through a connecting zone and
which is also provided in its upper region with a charging opening for charging material and a gas outlet and in its lower region with burners or nozzles,
wherein the metallic charging material, in particular steel scrap, which is charged into the charging material preheater forms a column of charging material which is heated in heat exchange relationship with the hot gases of the furnace vessel and the burners and
which is melted in the lower region by the burners and under the heating action of the arcs as well as in contact with the liquid sump in the furnace hearth and the molten material in the furnace hearth is brought to tapping temperature,
wherein moreover after the tapping operation a residual molten material remains in the furnace hearth (sump mode of operation),
characterised in that after the tapping operation, of the amount of charging material required for the next melting operation, a part is charged directly into the furnace vessel and the remainder is charged into the charging material preheater.

2. A method according to claim 1 characterised in that the ratio of electric arc energy introduced relative to the burner energy introduced is between 6:1 and 2:1.

3. A method according to claim 1 or claim 2 characterised in that the part which is charged directly into the furnace vessel makes up from 20 to 50% by weight of the amount of charging material required for the next melting operation.

4. A method according to one of claims 1 to 3 characterised in that the part which is to be charged directly into the furnace vessel is preheated by gases which are withdrawn from the gas outlet of the charging material preheater during the preceding smelting process.

5. A method according to one of claims 1 to 4 characterised in that the part which is charged directly into the furnace vessel essentially comprises heavy and medium scrap.

6. A method according to one of claims 1 to 5 characterised in that the part which is charged directly into the furnace vessel contains lump or granulate crude iron.

7. A method according to one of claims 1 to 6 characterised in that the entire amount of charging material in the shaft-like charging material preheater is smelted in a smelting process.

8. A method according to one of claims 1 to 7 characterised in that scavenging gases for improving mixing of the molten material are injected during the smelting process through under-bath nozzles or gas-pervious bottom scavenging bricks.

9. A method according to one of claims 1 to 8 characterised in that gases, in particular oxygen, are injected into the molten material through a lance which can be directed in different directions and which is adjustable in respect of height.

10. A smelting unit for carrying out the method according to one of claims 1 to 9 comprising:
an electric arc furnace (1) including a furnace vessel (3) and a cover (1) which can be pivoted away,
at least one shaft-like charging material preheater (2) which is arranged laterally on the furnace vessel (3) and
the interior (8) of which is connected in a region adjoining its bottom (13) to the interior (9) of the furnace vessel (3) through a connecting zone (7) and
which is also provided in its upper region with a closable charging opening (17) for charging material and a gas outlet (18) and in its lower region with burners or nozzles (15, 16),
characterised in that connected to the gas outlet (18) of the shaft-like material preheater (2) is the gas inlet of a preheating chamber (20) which is suitable for accommodating a container (21) filled with charging material.

11. A smelting unit according to claim 10 characterised in that arranged in the bottom of the furnace vessel (3) between the middle of the vessel and the vertical extension of the adjacent shaft wall (23) is at least one nozzle or a gas-pervious bottom scavenging brick (24).

12. A smelting unit according to claim 11 characterised in that the nozzle or the smelting brick (24) is disposed in the vicinity of the vertical extension of the shaft wall (23) which is adjacent to the furnace vessel.

13. A smelting unit according to one of claims 10 to 12 characterised in that the electrode or electrodes (6) of the arc furnace is or are displaced from the middle of the furnace vessel (3) in the direction of the shaft-like charging material preheater (2).

14. A smelting unit according to one of claims 10 to 13 characterised in that the lowest point of the hearth space in the furnace vessel (3) is in the region under the electrode or electrodes (6).

15. A smelting unit according to one of claims 10 to 14 characterised in that the bottom (13) of the charging material preheater (2) is designed to drop away towards the furnace hearth at an angle of inclination (14) of greater than 30° and less than 60°.

16. A smelting unit according to one of claims 10 to 12 characterised in that the ratio of the height to the square root of the mean cross-section of the shaft-like charging material preheater (2) is in the range of between 1.2 and 3.

17. A smelting unit according to one of claims 10 to 16 characterised in that the furnace vessel (3) and the charging material preheater (2) which is integrated therewith can be tilted about an axis joining the middle thereof to the middle of the vessel.

18. A smelting unit according to one of claims 10 to 17 characterised in that the cross-section of the interior of the charging material preheater is enlarged downwardly.

## Revendications

1. Procédé pour faire fonctionner une installation de fusion se composant d'un four à arc électrique comportant une cuve de four et un couvercle de four basculant et
d'au moins un dispositif de préchauffage de la charge en forme de puits disposé latéralement à la cuve du four et dont l'intérieur communique, dans une partie délimitant son fond, par une zone de mise en communication avec l'intérieur de la cuve du four,
qui comporte en outre, dans sa partie supérieure, une ouverture de chargement de la charge et une sortie pour les gaz et, dans sa partie inférieure, des brûleurs ou des buses,
la charge métallique chargée dans le dispositif de préchauffage de la charge, notamment de la ferraille d'acier, formant une colonne de charge qui est chauffée par échange de chaleur avec les gaz chauds de la cuve du four et des brûleurs, la partie inférieure de la colonne étant fondue par les brûleurs et sous l'action calorifique de l'arc électrique ainsi que par contact avec le bain liquide de la sole du four et la masse fondue étant portée dans la sole du four à la température de piquée,
une masse fondue résiduelle restant en outre dans la sole du four après la piquée (mode opératoire avec un reste de bain),
caractérisé en ce qu'il consiste, après la piquée, à charger une partie de la quantité de charge nécessaire pour la coulée suivante, directement dans la cuve du four et le reste dans le dispositif de préchauffage de la charge.

2. Procédé suivant la revendication 1, caractérisé en ce que le rapport de l'apport d'énergie par l'arc électrique à l'apport d'énergie par les brûleurs est compris entre 6:1 et 2:1.

3. Procédé suivant la revendication 1 ou 2, caractérisé en ce que la partie chargée directement dans la cuve du four représente de 20 à 50 % en poids de la quantité de charge nécessaire pour la fusion suivante.

4. Procédé suivant l'une des revendications 1 à 3, caractérisé en ce qu'il consiste à préchauffer la partie à charger directement dans la cuve du four par des gaz soutirés de la sortie pour les gaz du dispositif de préchauffage de la charge pendant le procédé de fusion précédent.

5. Procédé suivant l'une des revendications 1 à 4, caractérisé en ce que la partie chargée directement dans la cuve du four est constituée essentiellement de ferraille lourde et de ferraille moyenne.

6. Procédé suivant l'une des revendications 1 à 5, caractérisé en ce que la partie chargée directement dans la cuve du four contient de la fonte brute en morceaux ou en grains.

7. Procédé suivant l'une des revendications 1 à 6, caractérisé en ce qu'il consiste à fondre, dans un processus de fusion, toute la quantité de charge du dispositif de préchauffage de la charge en forme de puits.

8. Procédé suivant l'une des revendications 1 à 7, caractérisé en ce qu'il consiste à insuffler pendant le procédé de fusion, par des buses en-dessous du bain, ou par des dispositifs d'injection ménagés au fond et laissant passer des gaz, des gaz de balayage pour améliorer le mélange de la masse fondue.

9. Procédé suivant l'une des revendications 1 à 8, caractérisé en ce qu'il consiste à insuffler dans la masse fondue des gaz, notamment de l'oxygène, par une lance réglable en hauteur et orientable dans des directions différentes.

10. Installation de fusion pour la mise en oeuvre du procédé suivant l'une des revendications 1 à 9, comprenant
un four à arc électrique (1) comportant une cuve (3) de four et un couvercle (4) basculant,
au moins un dispositif de préchauffage (2) de la charge en forme de puits, disposé latéralement à la cuve (3) du four,
dont l'intérieur (8) communique, dans une partie adjacente à son fond (13), par une zone (7) de mise en communication, avec l'intérieur (9) de la cuve (3) du four,
qui comporte en outre, dans sa partie supérieure, une ouverture (17) de chargement qui peut être fermée et qui est destinée à charger de la charge et une sortie (18) pour les gaz et, dans sa partie inférieure, des brûleurs ou des buses (15,16),
caractérisée en ce que l'entrée pour les gaz de la chambre de préchauffage (20), qui est destinée à recevoir un récipient (21) empli de charge, communique avec la sortie (18) pour les gaz du dispositif de préchauffage (2) de la charge en forme de puits.

11. Installation suivant la revendication 10, caractérisée en ce qu'au fond de la cuve (3) du four, entre le milieu de la cuve et le prolongement vertical de la paroi (23) adjacente du puits, est prévue au moins une buse ou un dispositif d'injection (24) au fond laissant passer les gaz.

12. Installation suivant la revendication 11, caractérisée en ce que la buse ou le dispositif d'injection (24) est disposé à proximité du prolongement vertical de la paroi (23) du puits voisine de la cuve du four.

13. Installation suivant l'une des revendications 10 à 12, caractérisée en ce que l'électrode (les électrodes) (6) du four à arc électrique est (sont) décalée(s) du centre de la cuve (3) du four en direction du dispositif de préchauffage (2) de la charge en forme de puits.

14. Installation suivant l'une des revendications 10 à 13, caractérisée en ce que le point le plus bas de la chambre, de la sole dans la cuve (3) du four, se trouve en-dessous de la (des) électrode(s) (6).

15. Installation de fusion suivant l'une des revendications 10 à 14, caractérisée en ce que le fond (13) du dispositif de préchauffage (2) de la charge descend vers la sole du four en faisant avec celle-ci un angle (14) supérieur à 30° et inférieur à 60°.

16. Installation de fusion suivant l'une des revendications 10 à 15, caractérisée en ce que le rapport de la hauteur à la racine carrée de la section transversale médiane du dispositif de préchauffage (2) de la charge en forme de puits est compris entre 1,2 et 3.

17. Installation de fusion suivant l'une des revendications 10 à 16, caractérisée en ce que la cuve (3) du four et le dispositif de préchauffage (2) de la charge intégrée à celle-ci sont montées basculants par rapport à un axe passant par le milieu de celui-ci et par le centre de la cuve.

18. Installation suivant l'une des revendications 10 à 17, caractérisée en ce que la section transversale de l'intérieur du dispositif de préchauffage de la charge s'élargit vers le bas.
